# EUROPÄISCHE PATENTSCHRIFT

(11) **EP 1 794 013 B1**
(45) Veröffentlichungstag und Bekanntmachung des Hinweises auf die Patenterteilung: **09.03.2011**
(21) Anmeldenummer: 05778864.8
(22) Anmeldetag: 29.07.2005
(51) Int. Cl.: B60J 7/185

(54) **CABRIOLET-FAHRZEUG**
CABRIOLET
VEHICULE CABRIOLET

(30) Priorität: 25.09.2004 DE 102004046601
(43) Veröffentlichungstag der Anmeldung: 13.06.2007
(73) Patentinhaber: Wilhelm Karmann GmbH, 49084 Osnabrück (DE)
(72) Erfinder: PLASSMEYER, Jörg, 49196 Bad Laer (DE); SELLE, Heinrich, 32549 Bad Oeynhausen (DE); BUECKER, Ralf, 49170 Hagen a.T.W. (DE); FLASPÖHLER, Dirk, 49124 Georgsmarienhütte (DE); HEIDTMANN, Hermann, 49740 Haselünne (DE); HESELHAUS, Udo, 49479 Ibbenbüren (DE)
(74) Vertreter: Kronthaler, Schmidt & Coll.
(86) Internationale Anmeldenummer: PCT/DE2005/001338
(87) Internationale Veröffentlichungsnummer: WO 2006/032227

(56) Entgegenhaltungen:
- DE-A1- 3 929 527
- DE-A1- 10 139 187
- DE-U1- 20 023 676
- US-A- 2 831 718
- US-A- 3 372 954
- US-A1- 2001 005 090
- US-A1- 2002 163 202
- US-A1- 2003 141 741

## Beschreibung

Die Erfindung betrifft ein Cabriolet-Fahrzeug mit einem über Eingriffsglieder mittelbar oder unmittelbar an einem Windschutzscheibenrahmen sicherbaren Dach nach dem Oberbegriff des Anspruchs 1 sowie eine Verschlußvorrichtung nach dem Oberbegriff des Anspruchs 13.

Es sind zahlreiche Cabriolet-Fahrzeuge bekannt, bei denen das bewegbare Dach in seiner geschlossenen Stellung über zwei seitlich außen liegende Eingriffsglieder, etwa Drehfallen, Fanghaken oder ähnliches, an dem Windschutzscheibenrahmen des Fahrzeugs sicherbar ist.

Beide Eingriffsglieder sind über im wesentlichen quer zum Fahrzeug erstreckte und damit dem Verlauf der am Windschutzscheibenrahmen anliegenden Dachspitze folgende Kraftvermittler, etwa Ketten oder insbesondere Zug- und/oder Schubstangen, mit einem zentralen manuellen oder motorischen Antrieb verbunden.

Die EP 0972 665 B1 zeigt eine typische Anordnung mit einem zentralen Antrieb, der eine vertikale Drehachse umfaßt und auf ein um diese Achse drehbares Antriebsrad einwirkt, an dem zwei Zug-Schub-Stangen einander gegenüberliegend gehalten sind. Deren Enden sind abgekröpft, um eine sichernde Über-Totpunkt-Lage zu ermöglichen und dennoch zu gewährleisten, daß in dieser Lage bei geschlossenem Dach die Zug-Schub-Stangen der beiden Seiten nicht miteinander kollidieren. Bei Drehung des Antriebsrades wandern die Abkröpfungen der Stangen weit nach vorne bzw. hinten, so daß sich ein großer Platzbedarf in Fahrzeuglängsrichtung ergibt. Durch den auf der Drehachse angeordneten Antrieb ergibt sich zudem ein großer Platzbedarf in vertikaler Richtung.

Die US 2001/00590 A1 zeigt eine prinzipiell ähnliche Anordnung, bei der nur ein manuell zu betätigender Hebel vorgesehen ist, nicht jedoch ein Antriebsorgan. Von dem Hebel wird eine Scheibe bewegt, mittels der direkt die an diesem gehaltenen Zug- und Schubstangen zu betätigen sind.

Der Erfindung liegt das Problem zugrunde, eine bessere Anpaßbarkeit des Dachverschlußmechanismus' auch an geringe Platzverhältnisse zu erreichen.

Die Erfindung löst dieses Problem durch ein Cabriolet-Fahrzeug mit den Merkmalen des Anspruchs 1 oder des Anspruchs 2 sowie durch eine Verschlußvorrichtung mit den Merkmalen des Anspruchs 13. Hinsichtlich vorteilhafter Ausgestaltungen der Erfindung wird auf die weiteren Ansprüche 3 bis 12 sowie 14 und 15 verwiesen.

Mit der Ausbildung nach Anspruch 1 ist in jedem Fall die vertikale Erstreckung des Dachverschlusses vermindert. Das Antriebsorgan kann in der Dachspitze in einem neben dem oder den Antriebsrad oder -rädern ohnehin vorhandenen Raum untergebracht sein, ohne daß die Höhe der Dachspitze dadurch zunehmen müßte. Dabei muß das Antriebsorgan die Dachspitze nach unten nicht überragen.

In der Ausbildung nach Anspruch 2 ist die Erstreckung des Verschlusses in Fahrzeuglängsrichtung verkleinert. Durch die zumindest zwei nebeneinander liegenden Antriebsräder ist eine Abkröpfung der Zug-Schub-Stangen nicht erforderlich. Somit ist gewährleistet, daß bei Drehung der Antriebsräder der Raumbedarf des Verschlusses in Fahrzeuglängsrichtung nicht zunimmt.

Insbesondere wenn die Antriebsräder einen Durchmesser von weniger als 50 Millimetern haben, ist der Raumbedarf in deren Erstreckungsebene sehr gering, so daß eine klein dimensionierte und dadurch auch sehr leichte Dachspitze eingesetzt werden kann. Dadurch ist zudem die erforderliche Antriebskraft für die Dachöffnungs- oder - schließbewegung minimiert.

Unabhängig davon, ob das Kopplungsorgan auf ein zentrales Zahnrad, auf eines der mit den Kraftvermittlern verbundenen Antriebsräder oder auf zwei Antriebsräder wirkt, kann in jedem Fall ein Zahnrad für eine manuelle Notbetätigung bei Fehlfunktion des Antriebs vorgesehen sein, das entweder ständig in Eingriff stehen kann oder, sofern es nicht für den motorischen Antrieb benötigt wird, nur für den manuellen Betrieb in Eingriff gebracht wird, etwa durch vertikale Druckeinwirkung. Auch bei Ausfall des Antriebs bleibt der Verschluß dadurch bedienbar. Das Antriebsorgan wird dabei drucklos oder spannungsfrei geschaltet.

Besonders günstig ist es, wenn der Verschluß insgesamt modular ausgebildet ist und eine Grundplatte umfaßt, auf der wahlweise ein elektrisches oder hydraulisches Antriebsorgan montierbar ist. Dann kann die gleiche Grundplatte mit gleich bleibenden Abmessungen für verschiedene Fahrzeugtypen eingesetzt werden, was ihre flexible Verwendbarkeit verbessert.

Weitere Vorteile und Merkmale der Erfindung ergeben sich aus in der Zeichnung schematisch dargestellten und nachfolgend beschriebenen Ausführungsbeispielen des Gegenstandes der Erfindung.

In der Zeichnung zeigt:
- Fig. 1: ein vorderes Dachende (Dachspitze) mit angedeutetem Dachbezug eines ersten Aus- führungsbeispiels und mit einem nur schematisch angedeuteten Windschutz- scheibenrahmen in Ansicht von unten mit einem zentralen Verschlußmodul und seit- lich außen liegenden Eingriffsgliedern zur Verriegelung (hier nicht darge- stellt) am Windschutzscheibenrahmen, die über Zug-Schub-Stangen an das Verschluß- modul angebunden sind,
- Fig. 2: eine ähnliche Ansicht wie Fig. 1, jedoch ohne Windschutzscheibenrahmen und Dach- bezug, nach Entfernen der Deckplatte des Verschlußmoduls,
- Fig. 3: eine Einzelteilansicht des Verschluß- moduls, in etwa entsprechend dem Detail III in Fig. 2,
- Fig. 4: eine ähnliche Ansicht wie Fig. 3 des hier jedoch mit einer Deckplatte ge- schlossenen Verschlußmoduls,
- Fig. 5: die Teile nach Fig. 3 in perspektivi- scher Ansicht,
- Fig. 6: die Teile nach Fig. 4 in perspektivi- scher Ansicht,
- Fig. 7: die Dachspitze nach Fig. 1 in perspekti- vischer Ansicht von schräg unten,
- Fig. 8: die Dachspitze nach Fig. 2 in perspekti- vischer Ansicht von schräg unten,
- Fig. 9: eine ähnliche Ansicht wie Fig. 3 bei gleichartiger Getriebeanordnung, jedoch mit einem elektrischen Antriebsorgan und einer Spindel als Kopplungsorgan zum Ge- triebe,
- Fig. 9a: eine ähnliche Ansicht wie Fig. 9 bei gleichartiger Getriebeanordnung, jedoch mit einem manuellen Betätigungshebel und einem Zahnradsegment als Kopplungsorgan zum Getriebe,
- Fig. 10: eine alternative Ausführung mit zwei über das Kopplungsorgan angetriebenen Antriebsrädern und einem Hydraulikan- trieb,
- Fig. 11: eine ähnliche Ansicht wie Fig. 10 bei gleichartiger Getriebeanordnung, jedoch mit einem elektrischen Antriebsorgan und einer Spindel als Kopplungsorgan zum Ge- triebe,
- Fig. 12: eine weitere alternative Ausführung mit genau einem über das Kopplungsorgan an- getriebenen Antriebsrad und einem Hyd- raulikantrieb,
- Fig. 13: eine ähnliche Ansicht wie Fig. 12 bei gleichartiger Getriebeanordnung, jedoch mit einem elektrischen Antriebsorgan und einer Spindel als Kopplungsorgan zum Ge- triebe,
- Fig. 14: eine weitere alternative Ausführung mit genau einem über das Kopplungsorgan an- getriebenen Antriebsrad und einem Hyd- raulikantrieb,
- Fig. 15: eine ähnliche Ansicht wie Fig. 14 bei gleichartiger Getriebeanordnung, jedoch mit einem elektrischen Antriebsorgan und einer Spindel als Kopplungsorgan zum Ge- triebe.

Das erfindungsgemäße Cabriolet-Fahrzeug 1 ist hier als sog. Soft-Top-Fahrzeug ausgebildet, umfaßt also einen flexiblen Dachbezug 2. Auch eine Ausbildung mit festen Dachteilen ist gleichwertig möglich.

Ebenso kann das Fahrzeug 1 sowohl ein Zweisitzer sein als auch einen größeren Innenraum mit etwa zwei Sitzreihen hintereinander aufweisen.

Es umfaßt in jedem Fall ein bewegliches Dach 3, das zu seiner Öffnung im rückwärtigen Fahrzeugbereich ablegbar ist. Das in Fahrtrichtung F vordere Ende 4 des Daches 3, das häufig auch als Dachspitze bezeichnet wird, ist mit dem Windschutzscheibenrahmen 5 des Fahrzeugs 1 mittelbar oder unmittelbar zur Sicherung der geschlossenen Dachstellung verriegelbar.

Hierzu dienen in den gezeichneten Ausführungsbeispielen zwei in Fahrzeugquerrichtung q seitlich mehr oder weniger weit außen liegende Eingriffsorgane 6, die hier hakenartig ausgebildet und um horizontale Achsen schwenkbar sind. Sie können jedoch in unterschiedlichsten Weisen ausgebildet sein und zum Ver- oder Entriegeln auch translatorische oder überlagerte Rotations- und Translationsbewegungen ausführen oder um vertikale Achsen schwenken. Auch ist ihre Anzahl variabel. So kann beispielsweise auch noch ein zentrales Eingriffsorgan zusätzlich vorgesehen sein.

Die Eingrifforgane 6 sind über von einem hier zentralen Verschlußmodul 8 ausgehende, seitlich ausgreifende Kraftvermittler 7 beweglich. Diese sind hier als Zug-Schub-Stangen ausgebildet. Auch Ketten, Seilzüge, Wellen, Zahnriemen oder ähnliches kommen in Betracht. Dem Verschlußmodul 8, das auch außermittig liegen kann, ist ein Antrieb zugeordnet, der manuell erfolgen kann oder beispielsweise ein hydraulisches 9 oder elektrisches Antriebsorgan 10 umfassen kann.

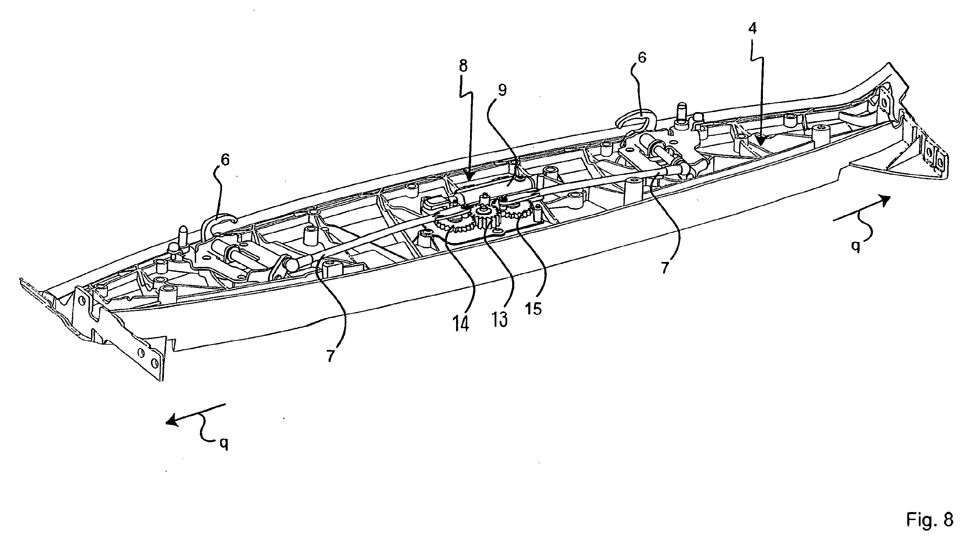

Dieses liegt zumindest nahezu parallel zur Fahrzeugquerrichtung q und in der Ebene der Kraftvermittler 7, somit im wesentlichen horizontal. Wie beispielsweise in Fig. 8 zu erkennen ist, kann das Antriebsorgan 9, 10 vollständig innerhalb der Höhenerstreckung der Dachspitze 4 aufgenommen sein, ohne diese nach unten hin zu überragen. Da nur ein relativ geringer Kraftaufwand erforderlich ist, kann das Antriebsorgan 9, 10 derart flach ausgeführt sein, daß die Höhenerstreckung der Dachspitze 4 nicht zu dessen Aufnahme vergrößert sein muß.

Aufgrund der nur geringen Erstreckung des Verschlußmoduls 8 kann es sogar möglich sein, dieses mit den Eingriffsorganen 6 und den Kraftvermittlern 7 im Windschutzscheibenrahmen 5 anzuordnen.

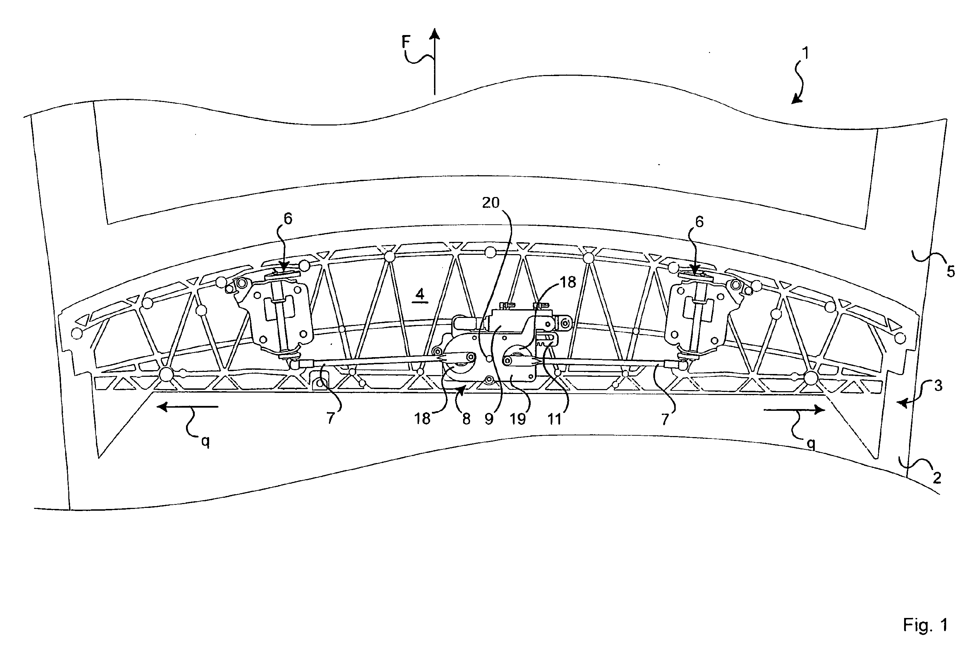

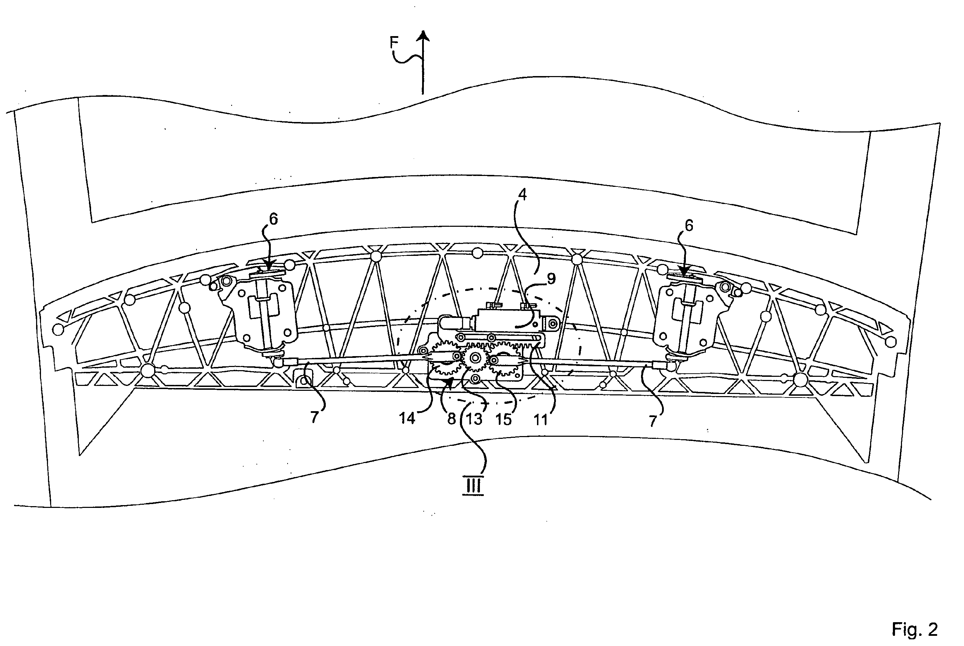

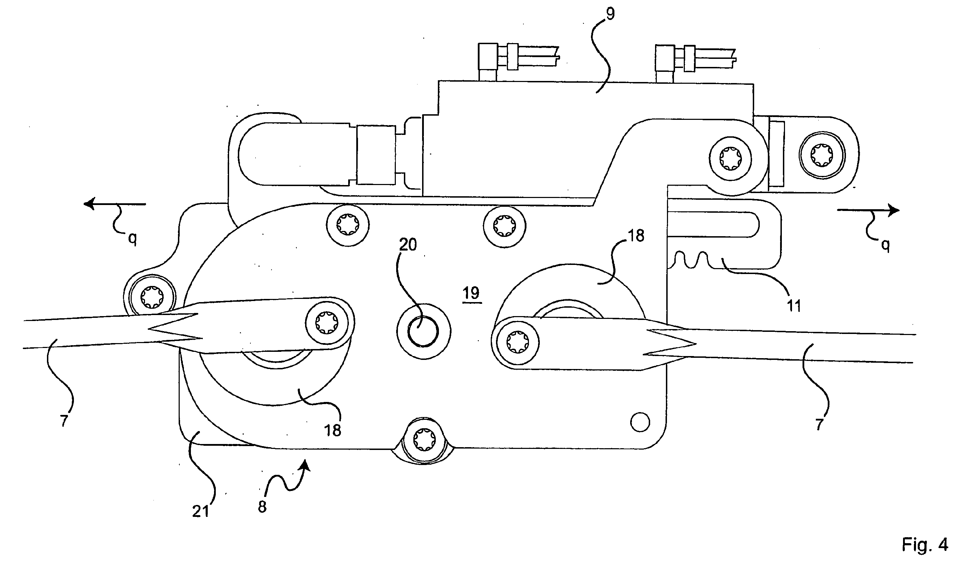

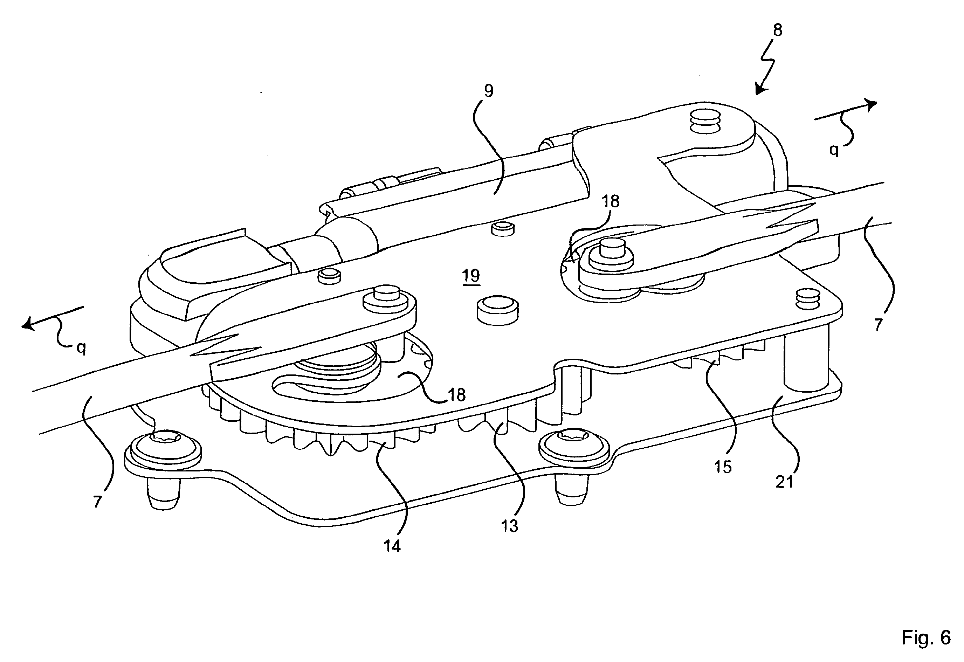

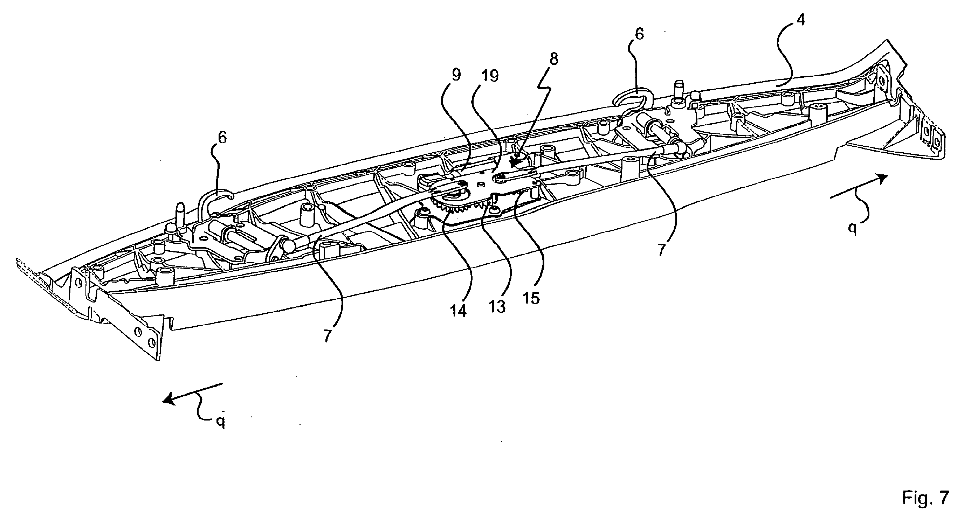

Im ersten Ausführungsbeispiel (Fig. 1 bis Fig. 8) ist als Antriebsorgan ein Hydraulikzylinder 9 dargestellt, dessen Kolben im wesentlichen horizontal und quer zum Fahrzeug verlagerbar ist. Linear mit dem Kolben des Antriebsorgans 9 ist ein Kopplungsorgan 11 in Gestalt einer Zahnstange beweglich, das an dem Getriebe zur Bewegung der Kraftvermittler 7 angreift.

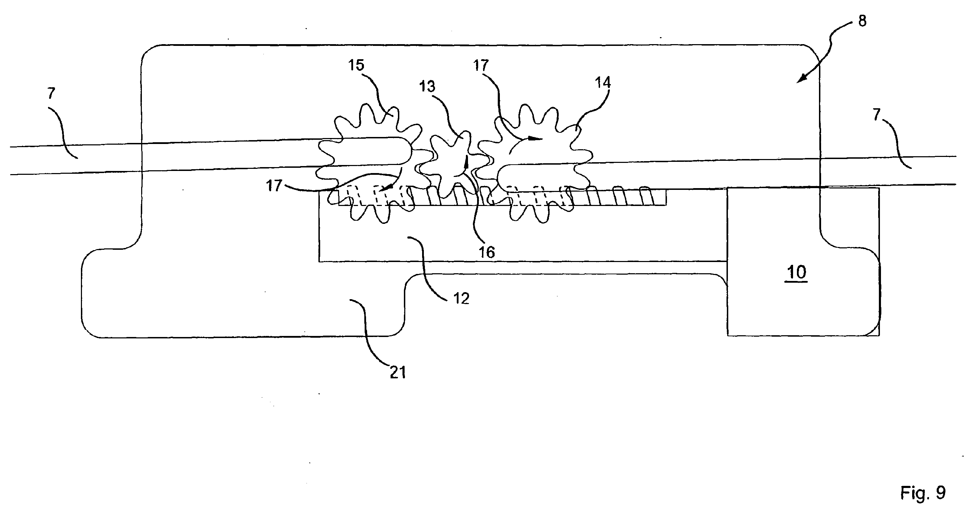

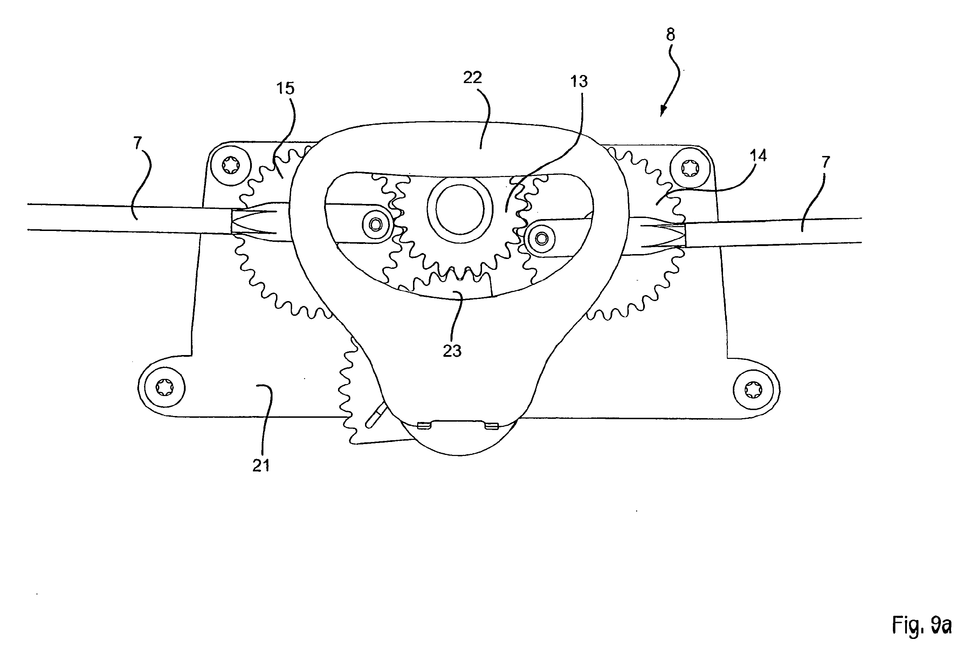

In Fig. 9 ist bei gleichem Getriebeaufbau als Antriebsorgan ein Elektromotor 10 vorgesehen, dessen Antriebsachse horizontal und quer zum Fahrzeug liegt. Auf der Antriebsachse ist als Kopplungsorgan zum Getriebe eine Spindel 12, ein Spiralkabel, eine Schneckenwelle oder dergleichen vorgesehen, die die Drehbewegung ebenfalls in eine Translation in etwa in Fahrzeugquerrichtung q übersetzt. Auch ein Seilzug, eine Kette oder ein Zahnriemen sind beispielsweise als Kopplungsorgane möglich.

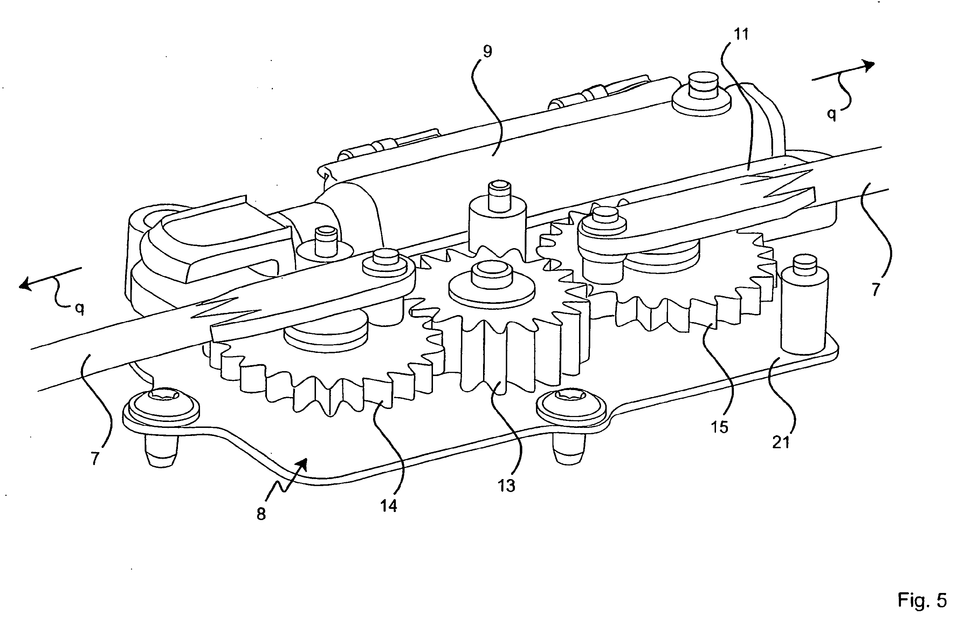

Bei beiden Antriebsarten greift das Kopplungsorgan 11, 12 an einem zentralen Zahnrad 13 an (sh. z. B. Fig. 5), das in zwei hier größere, in Fahrzeugquerrichtung q seitlich hiervon liegende Antriebsräder 14, 15 eingreift. Diese drehen daher gleichsinnig. Das zentrale Zahnrad 13 hat eine größere Höhenerstreckung als die Antriebsräder 14, 15. Somit kann das Zahnrad 13 in Eingriff mit dem jeweiligen Kopplungsorgan 11, 12 stehen, ohne daß die größeren Antriebsräder 14, 15 mit diesem kollidieren. Diese können sich teilweise in einer Ebene ober- oder unterhalb des Kopplungsorgans 11, 12 erstrecken (Fig. 5, Fig. 9).

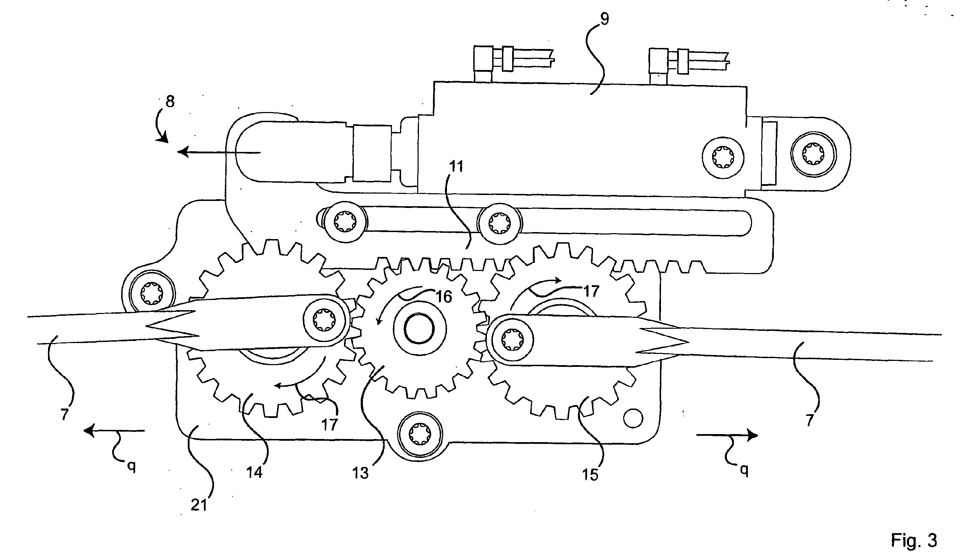

Die Antriebsräder 14, 15 tragen die Enden der Kraftvermittler 7, hier Zug-Schub-Stangen. In Fig. 5 ist die geschlossene Dachstellung gezeichnet, in der die Enden der Fahrzeuglängsmitte zugewandt sind. Dabei sind sie selbstsichernd in einer Über-Totpunkt-Stellung gehalten (Fig. 3), haben also die maximale einwärts ziehende Zugkraft um einen geringen Drehwinkel der Antriebsräder 14, 15 überschritten.

Durch Ausschub des Kolbens des Hydraulikzylinders 9 oder durch Drehung des Elektromotors 10 wird das zentrale Zahnrad 13 über das jeweilige Kopplungsorgan 11, 12 in Rotation in Richtung des Pfeils 16 vernetzt und dreht dadurch die Antriebsräder 14, 15 gleichsinnig in Richtung des Pfeils 17. Die daran angelenkten Zug-Schub-Stangen 7 können dann in Kreissegmentkulissen 18 einer das Verschlußmodul 8 begrenzenden Deckplatte 19 über ihren Totpunkt aufbewegt werden und die Eingriffsglieder 6 öffnen.

Um auch bei Ausfall des jeweiligen Antriebsorgans 9, 10 eine Notbetätigung zu ermöglichen, ist das Zahnrad 13 manuell drehbar. Hierzu ist in der Deckplatte 19 eine Ausnehmung 20 zum Eingriff eines Werkzeugs vorgesehen. Bei einem Hydraulikantrieb 9 kann dieser drucklos geschaltet werden, so daß das Zahnrad 13 auch während seines manuellen Drehens in Eingriff mit dem Kopplungsorgan 11 bleiben kann. Bei Verwendung eines Elektromotors 10 (Fig. 9) kann es erforderlich sein, das Zahnrad 13 für eine manuelle Betätigung aus der Eingriffsebene mit dem Kopplungsorgan 11 herauszudrücken, etwa gegen die Kraft einer Feder vertikal nach oben. Aufgrund der Dicke des Zahnrads 13 bleibt dieses dabei in Eingriff mit den Antriebsrädern 14, 15 und kann diese somit drehen:

In Fig. 9a ist zudem verdeutlicht, daß an Stelle des hydraulischen oder elektrischen Antriebsorgans 9, 10 auch ein manueller Betätigungshebel 22 vorgesehen sein kann, der über ein Zahnradsegment 23 an dem in gleicher Weise wie oben an der Grundplatte 21 montierten Zahnrad 13 angreift. Auch die Anordnung der Zahnräder 14, 15 bleibt dabei gleich wie oben. Die manuelle Betätigung ist auch in den folgenden Ausführungsbeispielen jeweils alternativ an derselben Grundplatte 21 montierbar.

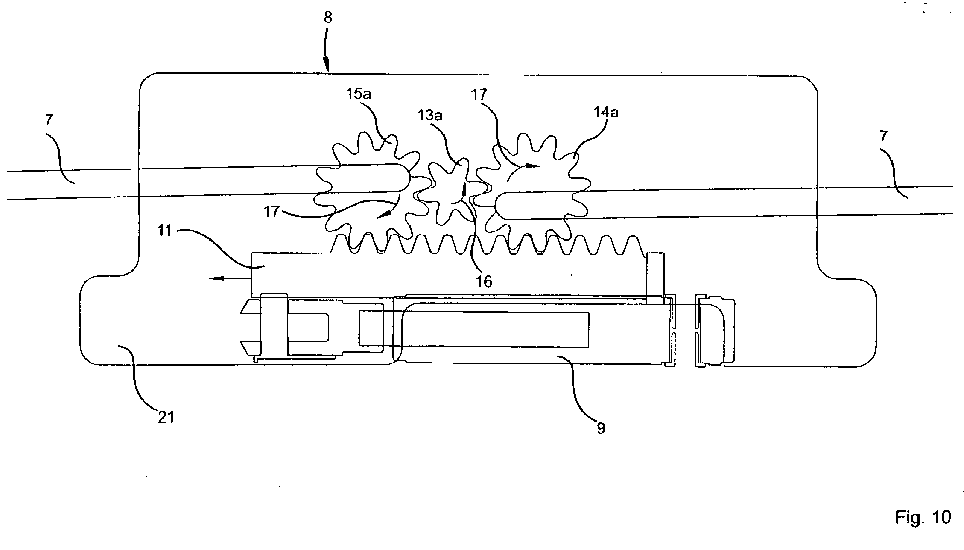

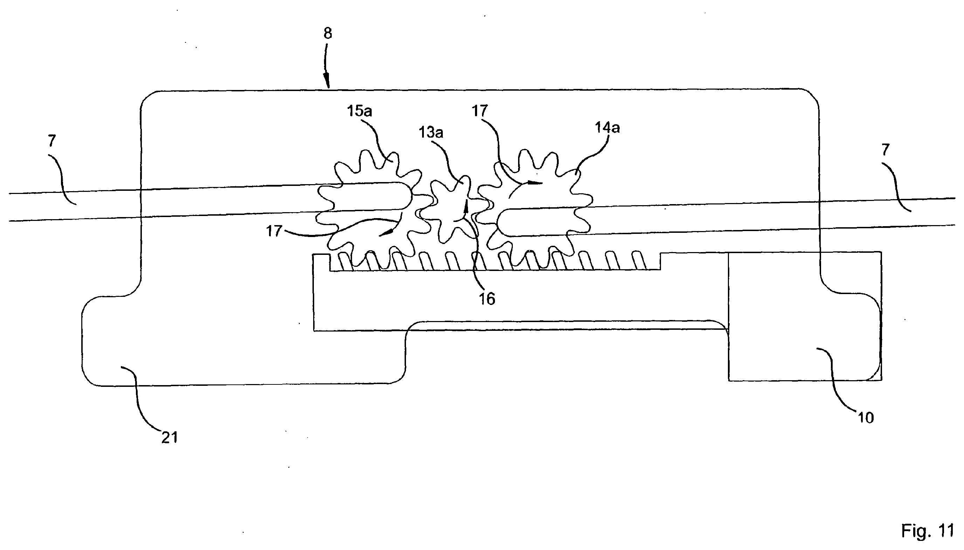

In Figur 10 ist ein weiteres Ausführungsbeispiel mit Hydraulikzylinder 9 und in Figur 11 bei gleicher Getriebeausbildung mit Elektromotor 10 dargestellt.

Eine Grundplatte 21 des Verschlußmoduls 8 ist hier wie auch in den anderen Ausführungsbeispielen so ausgebildet, daß wahlweise die eine oder andere Antriebsart montiert werden kann, so daß das Modul 8 sowohl bei Fahrzeugen mit elektrischer als auch mit hydraulischer Verschlußbetätigung ohne weitere. Änderungen eingesetzt werden kann, was die Einsatzmöglichkeiten erheblich erweitert und eine Großserienfertigung des Moduls 8 ermöglicht. Auch kann alternativ ein weiteres Kopplungsorgan, etwa ein Zahnradsegment, für einen anmontierbaren manuellen Betätigungshebel vorgesehen sein, so daß das Modul 8 auch für eine preiswerte manuelle Betätigung nutzbar ist.

In dem Ausführungsbeispiel nach den Figuren 10 und 11 greift das Kopplungsorgan 11, 12 gleichzeitig an zwei nebeneinander liegenden und zueinander beabstandeten Antriebszahnrädern 14a, 15a an, an denen jeweils ein Kraftvermittler 7 angelenkt ist. Beide Zahnräder 14a, 15a drehen daher gleichsinnig.

Ein dazwischen liegende Zahnrad 13a, das hier nicht in Eingriff mit dem Kopplungsorgan 11, 12 steht, ist nur für den manuellen Notbetrieb erforderlich und muß sich während des Normalbetriebs nicht in Eingriffsstellung mit den Antriebsrädern 14a, 15a befinde. Alternativ kann hier wie in den anderen Ausführungsbeispielen mit elektrischem Antriebsorgan 10 die Notbetätigung bei verringertem Kraftaufwand auch ohne dieses Zahnrad 13a über eine direkte Beeinflussung der Antriebswelle erfolgen.

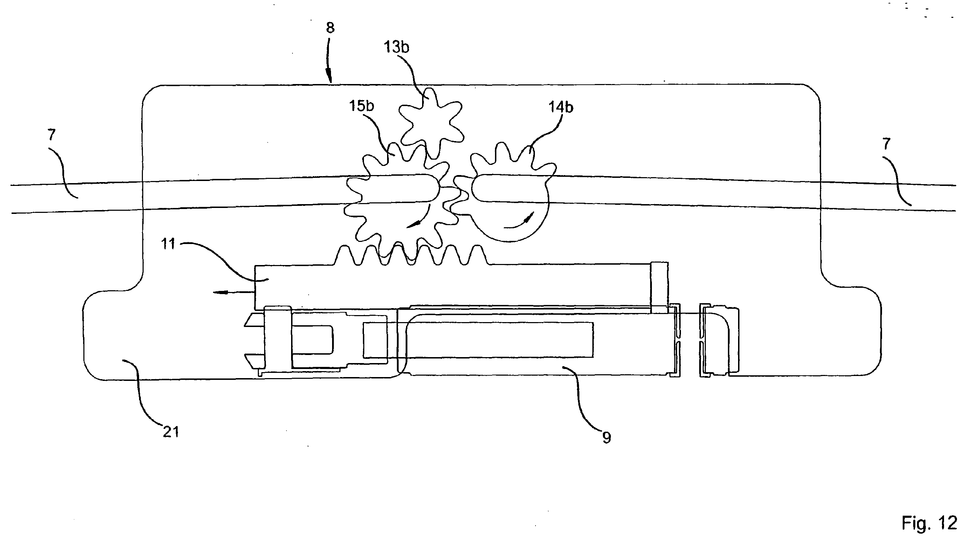

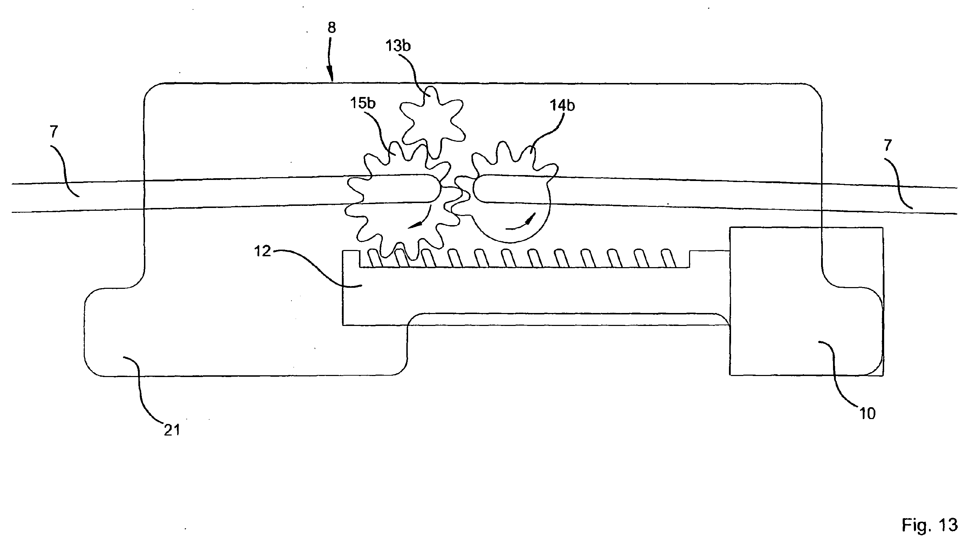

In einem weiteren Ausführungsbeispiel (Figur 12, Figur 13) greift das Kopplungsorgan nur an einem ersten Antriebszahnrad 15b an, an dem ein Kraftvermittler 7 angelenkt ist. Von diesem Antriebszahnrad ist - hier direkt und daher gegensinnig drehend - ein zweites Antriebsrad 14b für einen zweiten Kraftvermittler 7 antreibbar. Das zweite Antriebsrad 14b ist nur über einen Teil seines Umfangs mit Zähnen versehen, so daß es an dem verbleibenden Teilumfang einen verminderten Durchmesser aufweist und dadurch das Kopplungsorgan 11, 12 daran vorbeigeschoben werden kann, ohne mit dem Antriebsrad 14b zu kollidieren.

Ein zusätzliches Zahnrad 13b, das in eines der Antriebsräder 15b, 14b eingreifen kann, kann für den manuellen Notbetrieb vorgesehen sein und muß sich ebenfalls während des Normalbetriebs nicht in Eingriffsstellung befinden. Auch hier ist alternativ ein Notbetrieb über eine Beeinflussung der Antriebswelle mit Kraftumlenkung für eine manuelle Drehung um eine vertikale Drehachse möglich.

Bei den bisher gezeigten Ausführungsbeispielen umfaßt das Getriebe jeweils zumindest zwei in Fahrzeugquerrichtung nebeneinander liegende und miteinander in Wirkverbindung stehende Antriebsräder 14,15;14a,15a;14b,15b. Die seitlich ausgreifenden Kraftvermittler 7 sind dabei jeweils von getrennten Antriebsrädern 14,14a,14b bzw. 15,15a,15b bewegbar. Dadurch ergibt sich auch in geschlossener Dachstellung mit einer Über-Totpunkt-Lage der Enden der Kraftvermittler 7 auch bei deren geradliniger Ausbildung keine Kollisionsgefahr. Eine Abkröpfung ist nicht erforderlich. Dadurch ist gewährleistet, daß während jeder Phase der Verschlußbewegung kein Teil des Kraftvermittlers 7 über den Durchmesser des jeweiligen Antriebsrades 14,15;14a,15a; 14b,15b in Fahrzeuglängsrichtung hinausragt. Die Erstreckung des Verschlußmoduls ist daher nicht nur in der Höhe, sondern auch in Fahrzeuglängsrichtung sehr gering. Der Durchmesser eines Antriebsrades 14,15;14a,15a; 14b,15b liegt typisch bei 40 bis 50 Millimetern. In Fahrzeugquerrichtung q steht hingegen in der Dachspitze 4 genügend Raum zur Verfügung, wodurch es unproblematisch ist, mehrere Zahnräder nebeneinander anzuordnen.

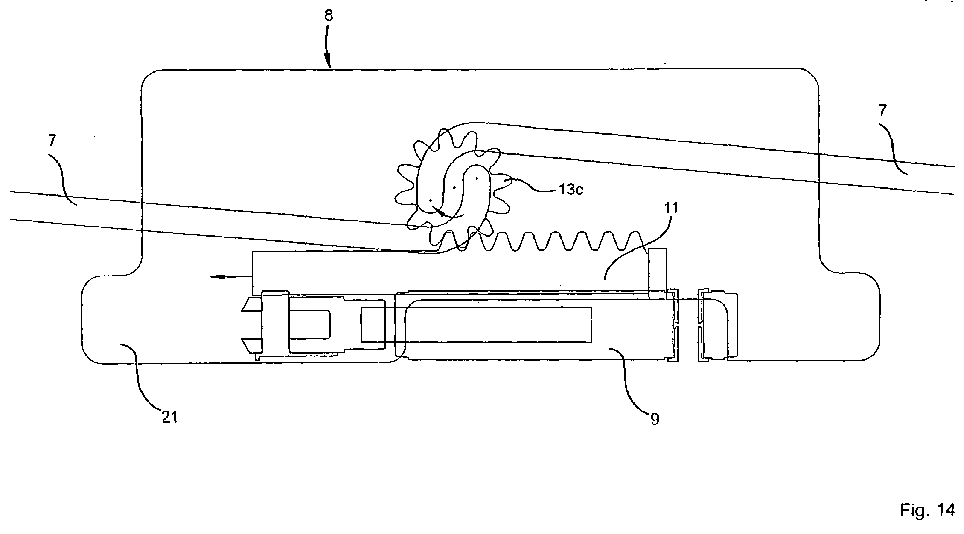

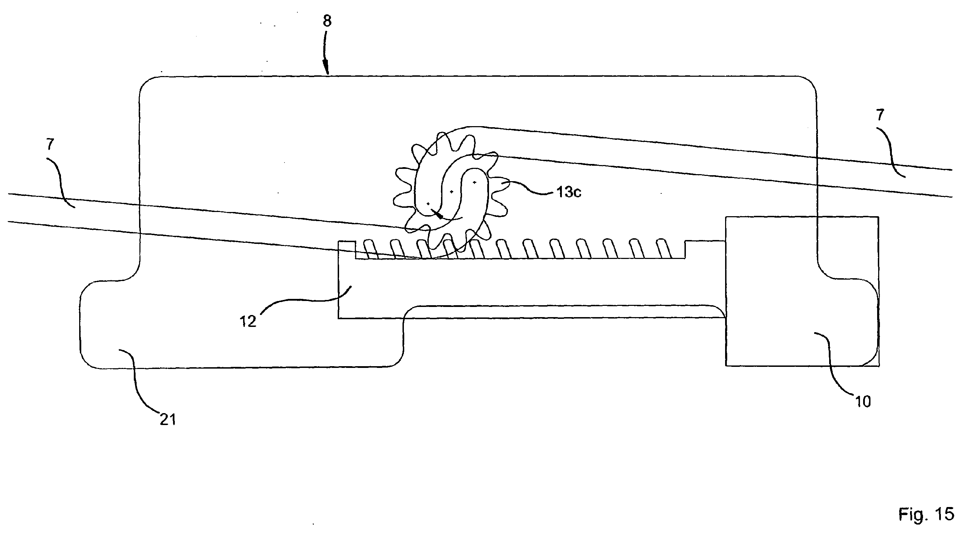

Ein weiteres Ausführungsbeispiel (Fig. 14, Fig. 15) zeigt, daß es auch möglich ist, die Antriebsanordnung nach Anspruch 1 ohne die Nebeneinanderhalterung der Antriebsräder nach Anspruch 2 vorzusehen. Auch hier ist die Vertikalerstreckung des Verschlußmoduls 8 verringert. Beide Zug-Schub-Stangen 7 sind hier jedoch an einem gemeinsamen Zahnrad 13c gehalten, das über das jeweilige Kopplungsorgan 11 bei hydraulischem Antrieb 9 (Fig. 14) bzw. 12 bei elektrischem Antrieb 10 (Fig. 15) direkt antreibbar ist. Die Kraftvermittler 7 sind daher zur Vermeidung einer Kollisionsgefahr in herkömmlicher Weise abgekröpft.

Das Verschlußmodul 8 kann in jedem Fall vor seinem Einbau vormontiert und getestet und als fertig eingestellte modulare Einheit an die Dachspitze 4 anmontiert werden.

## Patentansprüche

1. Cabriolet-Fahrzeug (1) mit einem beweglichen, in seiner geschlossenen Stellung an einem Windschutzscheibenrahmen (5) sicherbaren Dach (3), wobei zur Sicherung zumindest zwei bewegliche Eingriffsorgane (6) und zumindest ein Antrieb für diese vorgesehen sind, der zur Übertragung der Antriebskraft über jeweils mit einer Komponente in Fahrzeugquerrichtung ausgreifende Kraftvermittler (7) mit den Eingriffsorganen (6) in Wirkverbindung steht,
**dadurch gekennzeichnet,**
**daß** der Antrieb ein zumindest nahezu in Fahrzeugquerrichtung (q) und in der Ebene der Kraftvermittler (7) liegendes hydraulisches oder elektrisches Antriebsorgan (9;10) umfaßt, mittels dessen über ein in der Ebene des Antriebsorgans (9;10) liegendes Kopplungsorgan (11;12) ein die Bewegung eines oder mehrerer Kraftvermittler (7) steuerndes Getriebe bewegbar ist.

2. Cabriolet-Fahrzeug (1) mit einem beweglichen, in seiner geschlossenen Stellung an einem Windschutzscheibenrahmen (5) sicherbaren Dach (3), wobei zur Sicherung zumindest zwei bewegliche Eingriffsorgane (6) und zumindest ein Antrieb für diese vorgesehen sind, der zur Übertragung der Antriebskraft über jeweils mit einer Komponente in Fahrzeugquerrichtung ausgreifende Kraftvermittler (7) mit den Eingriffsorganen (6) in Wirkverbindung steht, insbesondere nach Anspruch 1,
**dadurch gekennzeichnet,**
**daß** ein die Bewegung eines oder mehrerer Kraftvermittler (7) steuerndes Getriebe zumindest zwei in Fahrzeugquerrichtung (q) nebeneinander liegende und miteinander in mittelbarer oder unmittelbarer Wirkverbindung stehende Antriebsräder (14,15;14a,15a;14b,15b) umfaßt, wobei seitlich ausgreifende Kraftvermittler (7) jeweils von getrennten Antriebsrädern (14,14a,14b;15,15a,15b) bewegbar sind.

3. Cabriolet-Fahrzeug (1) nach einem der Ansprüche 1 oder 2,
**dadurch gekennzeichnet,**
**daß** der Antrieb ein elektrisches Antriebsorgan (10) mit einer zumindest nahezu horizontal und quer zum Fahrzeug liegenden Drehachse und einer mit dieser verbundenen Spindel (12) als Kopplungsorgan zum Getriebe umfaßt.

4. Cabriolet-Fahrzeug (1) nach einem der Ansprüche 1 oder 2,
**dadurch gekennzeichnet,**
**daß** der Antrieb ein hydraulisches Antriebsorgan (9) mit einem zumindest nahezu horizontal und quer zum Fahrzeug (1) verlagerbaren Kolben und einer mit diesem verbundenen Zahnstange (11) als Kopplungsorgan zum Getriebe umfaßt.

5. Cabriolet-Fahrzeug (1) nach einem der Ansprüche 1 bis 4,
**dadurch gekennzeichnet,**
**daß** das Kopplungsorgan (11;12) an einem zentralen ersten Zahnrad (13) des Getriebes angreift, von dem zwei seitlich neben diesem liegende Antriebsräder (14;15) für die Kraftvermittler (7) bewegbar sind.

6. Cabriolet-Fahrzeug (1) nach Anspruch 5,
**dadurch gekennzeichnet,**
**daß** das zentrale Zahnrad (13) aus der Eingriffsstellung mit dem Kopplungsorgan (11;12) bei verbleibendem Eingriff mit den seitlichen Antriebsrädern (14;15) herausdrückbar und manuell notbetätigbar ist.

7. Cabriolet-Fahrzeug (1) nach einem der Ansprüche 1 bis 4,
**dadurch gekennzeichnet,**
**daß** das Kopplungsorgan (11;12) an zwei nebeneinander liegenden und zueinander beabstandeten Antriebszahnrädern (14a;15a), an denen jeweils ein Kraftvermittler (7) angelenkt ist, angreift.

8. Cabriolet-Fahrzeug (1) nach Anspruch 7,
**dadurch gekennzeichnet,**
**daß** ein weiteres Zahnrad (13a) für eine manuelle Notbetätigung vorgesehen ist, das zumindest während dieser in Eingriff mit den Antriebszahnrädern (14a;15a) steht.

9. Cabriolet-Fahrzeug (1) nach einem der Ansprüche 1 bis 4,
**dadurch gekennzeichnet,**
**daß** das Kopplungsorgan (11;12) an einem ersten Antriebszahnrad (15b), an dem ein Kraftvermittler (7) angelenkt ist, angreift und von diesem Antriebszahnrad (15b) ein zweites Antriebsrad (14b) für einen zweiten Kraftvermittler (7) antreibbar ist.

10. Cabriolet-Fahrzeug (1) nach Anspruch 9,
**dadurch gekennzeichnet,**
**daß** ein weiteres Zahnrad (13b) für eine manuelle Notbetätigung vorgesehen ist, das zumindest während dieser in Eingriff mit einem Antriebszahnrad (14b;15b) steht.

11. Cabriolet-Fahrzeug (1) nach einem der Ansprüche 1 bis 10,
**dadurch gekennzeichnet,**
**daß** die Kraftvermittler (7) als Zug-Schub-Stangen ausgebildet sind.

12. Cabriolet-Fahrzeug (1) nach einem der Ansprüche 1 bis 11,
**dadurch gekennzeichnet,**
**daß** die Antriebszahnräder (14,15;14a,15a; 14b,15b) einen Durchmesser von weniger als 50 Millimetern haben.

13. Verschlußvorrichtung für ein Cabriolet-Fahrzeug, insbesondere für ein Cabriolet-Fahrzeug nach einem der Ansprüche 1 bis 12, wobei die Verschlußvorrichtung ein Modul (8) umfaßt mit einer Grundplatte (21), zumindest einem drehbaren Antriebszahnrad (14,15; 14a,15a;14b,15b) zur beweglichen Halterung eines oder mehrerer mit einer quer auswärts weisenden Komponente zu seitlichen Eingriffsgliedern (6) führenden und als Kraftvermittler (7) wirkenden Zug-Schub-Stangen, und einem Kopplungsorgan (11;12), wobei das Modul (8) wahlweise mit einem mittelbar oder unmittelbar auf zumindest ein Antriebszahnrad (14,15;14a,15a;14b,15b) einwirkenden hydraulischen oder elektrischen Antriebsorgan (9;10) versehbar ist.

14. Verschlußvorrichtung nach Anspruch 13,
**dadurch gekennzeichnet,**
**daß** an derselben Grundplatte (21) wahlweise ein elektrisches (10) oder hydraulisches (9) Antriebsorgan montierbar ist.

15. Verschlußvorrichtung nach einem der Ansprüche 13 oder 14,
**dadurch gekennzeichnet,**
**daß** an derselben Grundplatte (21) wahlweise ein elektrisches (10) oder hydraulisches (9) Antriebsorgan oder ein manueller Antriebshebel (22) montierbar ist.

## Claims

1. Convertible vehicle (1) comprising a movable roof (3) securable in its closed position to a windshield frame (5), wherein at least two moveable engagement members (6) for securing and at least one drive for said engagement members (6) are provided, said drive is in operative communication with the engagement members (6) for transmission of the drive force via force communicators (7) engaging outwardly in each case with a component in a transverse direction of the vehicle,
**characterized in that**
the drive includes at least a hydraulic or electrical drive member (9; 10) disposed substantially in the transverse direction of the vehicle (q) and in the plane of the force communicators (7), by way of which drive member (9; 10) a transmission controlling the movement of one or more force communicators (7) is movable via a coupling member (11; 12) disposed in the plane of the drive member (9; 10).

2. Convertible vehicle (1) comprising a movable roof (3) securable in its closed position to a windshield frame (5), wherein at least two moveable engagement members (6) for securing and at least one drive for said engagement members (6) are provided, said drive is in operative communication with the engagement members (6) for transmission of the drive force via force communicators (7) engaging outwardly in each case with a component in a transverse direction of the vehicle, in particular according to claim 1,
**characterized in that**
a transmission controlling the movement of one or more force communicators (7) includes at least two drive gears (14, 15; 14a, 15a; 14b, 15b) disposed adjacent to each other in the transverse (q) direction of the vehicle and in direct or indirect operative communication with each other, wherein laterally outwardly engaging force communicators (7) are respectively movable by seperate drive gears (14, 14a, 14b; 15, 15a, 15b).

3. Convertible vehicle (1) according to claim 1 or 2,
**characterized in that**
the drive includes an electrical drive member (10), which has a rotary axis disposed substantially horizontally and transversely relative to the vehicle and a spindle (12) connected thereto, as a coupling member to the transmission.

4. Convertible vehicle (1) according to claim 1 or 2,
**characterized in that**
the drive includes a hydraulic drive member (9), which has a piston that is shiftable substantially horizontally and transversely relative to the vehicle and a toothed rack (11) connected thereto, as the coupling member to the transmission.

5. Convertible vehicle (1) according to any one of claims 1 to 4,
**characterized in that**
the coupling member (11; 12) engages at a central first gear (13) of the transmission, by which first gear two drive gears (14; 15), which drive gears are disposed laterally next to said first gear, can be moved for the force communicators (7).

6. Convertible vehicle (1) according to claim 5,
**characterized in that**
the central gear (13) can be pressed out of the engagement position with the coupling member (11; 12), while still remaining engaged with the lateral drive gears (14; 15), and can be manually actuated in case of an emergency.

7. Convertible vehicle (1) according to any one of claims 1 to 4,
**characterized in that**
the coupling member (11; 12) engages at two drive gears (14a; 15a) which are disposed adjacent to each other and spaced apart from each other and to which a force communicators (7) is hinged.

8. Convertible vehicle (1) according to claim 7,
**characterized in that**
a further gear (13a) is provided for manual emergency actuation and is in engagement with the drive gears (14a; 15a) at least during manual emergency actuation.

9. Convertible vehicle (1) according to any one of claims 1 to 4,
**characterized in that**
the coupling member (11; 12) engages at a first drive gear (15b) to which a force communicator (7) is hinged and a second drive gear (14b) for a second force communicator (7) can be driven by said first drive gear (15b).

10. Convertible vehicle (1) according to claim 9,
**characterized in that**
a further gear (13b) is provided for manual emergency actuation and is in engagement with the drive gears (14b; 15b) at least during manual emergency actuation.

11. Convertible vehicle (1) according to any one of claims 1 to 10,
**characterized in that**
the force communicators (7) are formed as pull-push-bars.

12. Convertible vehicle (1) according to any one of claims 1 to 11,
**characterized in that**
the drive gears (14, 15; 14a, 15a; 14b, 15b) have a diameter of less than 50 millimeters.

13. Closing device for a convertible vehicle, in particular for a convertible vehicle according to any one of claims 1 to 12, wherein the closing device includes a module (8) having a base plate (21), at least one rotatable drive gear (14, 15; 14a, 15a; 14b, 15b) for moveably supporting one or more force communicators (7) with a transversely outwardly pointing component leading to lateral engagement members (6), which force communicators (7) act as pull-push-bars, and a coupling member (11; 12), wherein the module (8) can be selectively provided with an electrical or hydraulic drive member (9; 10) acting directly or indirectly on at least one drive gear (14, 15; 14a, 15a; 14b, 15b).

14. Closing device according to claim 13,
**characterized in that** an electrical (10) or hydraulic (9) drive member can be selectively mounted to the same base plate (21).

15. Closing device according to claim 13 or 14,
**characterized in that** an electrical (10) or hydraulic (9) drive member or a manual drive lever can be selectively mounted to the same base plate (21).

## Revendications

1. Véhicule de type cabriolet (1) avec un toit mobile (3) qui peut être bloqué en position fermée sur un cadre de pare-brise (5), dans lequel il est prévu pour le blocage au moins deux organes de prise mobiles (6) et au moins une commande pour ceux-ci, qui coopère avec les organes de prise (6) pour la transmission de la force de commande par le biais, respectivement, de transmetteurs de force (7) se déployant avec une composante dans la direction transversale du véhicule,
**caractérisé en ce que**
la commande comprend un organe de commande hydraulique ou électrique (9 ; 10) se
trouvant au moins presque dans la direction transversale du véhicule (q) et dans le plan des transmetteurs de force (7), au moyen duquel organe peut être déplacée une transmission commandant le mouvement d'un ou plusieurs transmetteurs de force (7) par le biais d'un organe de couplage (11 ; 12) situé dans le plan de l'organe de commande (9 ; 10).

2. Véhicule de type cabriolet (1) avec un toit mobile (3) qui peut être bloqué en position fermée sur un cadre de pare-brise (5), dans lequel il est prévu pour le blocage au moins deux organes de prise mobiles (6) et au moins une commande pour ceux-ci, qui coopère avec les organes de prise (6) pour la transmission de la force de commande par le biais, respectivement, de transmetteurs de force (7) se déployant avec une composante dans la direction transversale du véhicule,
**caractérisé en ce que**
une transmission commandant le mouvement d'un ou plusieurs transmetteurs de force (7) comprend au moins deux roues d'entraînement (14, 15 ; 14a, 15a; 14b, 15b) situées l'une à côté de l'autre dans la direction transversale (q) du véhicule et coopérant indirectement ou directement l'une avec l'autre, les transmetteurs de force (7) se déployant latéralement pouvant être déplacés respectivement par des roues d'entraînement séparées (14, 14a, 14b ; 15, 15a, 15b).

3. Véhicule de type cabriolet (1) selon l'une quelconque des revendications 1 ou 2,
**caractérisé en ce que**
la commande comprend un organe de commande électrique (10) avec un axe de rotation se situant au moins presque horizontalement et transversalement au véhicule et une broche (12) raccordée à celui-ci comme organe de couplage pour la transmission.

4. Véhicule de type cabriolet (1) selon l'une quelconque des revendications 1 ou 2,
**caractérisé en ce que**
la commande comprend un organe de commande hydraulique (9) avec un piston déplaçable au moins presque horizontalement et transversalement au véhicule (1) et une crémaillère (11) raccordée à celui-ci comme organe de couplage pour la transmission.

5. Véhicule de type cabriolet (1) selon l'une quelconque des revendications 1 à 4,
**caractérisé en ce que**
l'organe de couplage (11 ; 12) s'applique sur une première roue dentée centrale (13) de la transmission, par laquelle peuvent être déplacées deux roues d'entraînement (14 ; 15) se trouvant latéralement à côté de celle-ci pour les transmetteurs de force (7).

6. Véhicule de type cabriolet (1) selon la revendication 5,
**caractérisé en ce que**
la roue dentée centrale (13) peut être extraite de la position de prise avec l'organe de couplage (11 ; 12) tandis que la prise subsiste avec les roues d'entraînement latérales (14 ; 15) et peut être actionnée d'urgence manuellement.

7. Véhicule de type cabriolet (1) selon l'une quelconque des revendications 1 à 4,
**caractérisé en ce que**
l'organe de couplage (11 ; 12) s'applique sur deux roues dentées d'entraînement (14a ; 15a) situées l'une à côté de l'autre et distantes l'une de l'autre, sur lesquelles est articulé respectivement un transmetteur de force (7).

8. Véhicule de type cabriolet (1) selon la revendication 7,
**caractérisé en ce que**
il est prévu une autre roue dentée (13a) pour un actionnement d'urgence manuel, qui est en prise au moins pendant celui-ci avec les roues dentées d'entraînement (14a ; 15a).

9. Véhicule de type cabriolet (1) selon l'une quelconque des revendications 1 à 4,
**caractérisé en ce que**
l'organe de couplage (11 ; 12) s'applique sur une première roue dentée d'entraînement (15b), sur laquelle est articulé un transmetteur de force (7), et une seconde roue d'entraînement (14b) peut être entraînée par cette roue dentée d'entraînement (15b) pour un second transmetteur de force (7).

10. Véhicule de type cabriolet (1) selon la revendication 9,
**caractérisé en ce que**
il est prévu une autre roue dentée (13b) pour un actionnement d'urgence manuel, qui est en prise au moins pendant celui-ci avec une roue dentée d'entraînement (14b ; 15b).

11. Véhicule de type cabriolet (1) selon l'une quelconque des revendications 1 à 10,
**caractérisé en ce que**
les transmetteurs de force (7) se présentent sous la forme de bielles de traction-poussée.

12. Véhicule de type cabriolet (1) selon l'une quelconque des revendications 1 à 11,
**caractérisé en ce que**
les roues dentées d'entraînement (14, 15 ; 14a, 15a; 14b, 15b) ont un diamètre inférieur à 50 millimètres.

13. Dispositif de fermeture destiné à un véhicule de type cabriolet, en particulier pour un véhicule de type cabriolet selon l'une quelconque des revendications 1 à 12, lequel dispositif de fermeture comprend un module (8) avec une plaque de base (21), au moins une roue dentée d'entraînement rotative (14, 15 ; 14a, 15a ; 14b, 15b) pour le support mobile d'une ou plusieurs bielles de traction-poussée menant avec une composante tournée transversalement vers l'extérieur à des éléments de prise latéraux (6) et agissant comme des transmetteurs de force (7), et un organe de couplage (11 ; 12), dans lequel le module (8) peut être pourvu au choix d'un organe de commande hydraulique ou électrique (9 ; 10) agissant indirectement ou directement sur au moins une roue dentée d'entraînement (14, 15 ; 14a, 15a ; 14b, 15b).

14. Dispositif de fermeture selon la revendication 13,
**caractérisé en ce que**
l'on peut monter sur la même plaque de base (21), au choix, un organe de commande électrique (10) ou hydraulique (9).

15. Dispositif de fermeture selon l'une quelconque des revendications 13 ou 14,
**caractérisé en ce que**
l'on peut monter sur la même plaque de base (21), au choix, un organe de commande électrique (10) ou hydraulique (9) ou un levier de commande manuel (22).
